# EUROPÄISCHE PATENTSCHRIFT

(11) **EP 2 821 322 B1**
(45) Veröffentlichungstag und Bekanntmachung des Hinweises auf die Patenterteilung: **20.06.2018**
(21) Anmeldenummer: 14165677.7
(22) Anmeldetag: 23.04.2014
(51) Int. Cl.: B62D 7/15

(54) **Fahrzeug mit mehreren Lenkprogrammen**
Vehicle with multiple guidance programs
Véhicule doté de plusieurs programmes de direction

(30) Priorität: 04.07.2013 DE 102013011152
(43) Veröffentlichungstag der Anmeldung: 07.01.2015
(73) Patentinhaber: CLAAS Selbstfahrende Erntemaschinen GmbH, 33428 Harsewinkel (DE)
(72) Erfinder: Brunnert, Dr., Andreas, 33397 Rietberg (DE); Irmer, Daniel, 33442 Herzebock-Clarholz (DE); Bormann, Bastian, 23749 Grube (DE)

(56) Entgegenhaltungen:
- EP-B1- 0 817 741
- WO-A1-96/31387
- WO-A1-2013/091418
- JP-A- H0 869 323
- JP-A- 2010 256 941

## Beschreibung

Die vorliegende Erfindung betrifft ein landwirtschaftliches Fahrzeug, bei dem vordere und hintere Räder nach wählbaren Lenkprogrammen lenkbar sind. Ein solches Fahrzeug ist aus EP 0 817 741 B1 bekannt. Dieses herkömmliche Fahrzeug weist eine Achsschenkellenkung mit je einem Lenktrapez an Vorder- und Hinterachse auf. Bei Geradeausfahrt liegen die Achsschenkel der vorderen bzw. hinteren Räder auf einer gleichen Linie, hier als vordere bzw. hintere Fahrgestellachse bezeichnet.

Das herkömmliche Fahrzeug unterstützt insbesondere Frontlenkung, d.h. ein Lenkprogramm, bei dem lediglich die vorderen Räder geschwenkt werden, während die Achsschenkel der hinteren Räder auf der hinteren Fahrgestellachse unbeweglich sind. Ein Lenkpol ist somit entlang der hinteren Fahrgestellachse beweglich. Ein zweites Lenkprogramm, in welchem die hinteren Räder jeweils gegensinnig zu den vorderen schwenken, liefert einen Lenkpol, der auf einer sich zwischen vorderer und hinterer Fahrgestellachse erstreckenden Linie beweglich ist, und ermöglicht das Fahren mit engem Kurvenradius. Die Wahl eines dritten Lenkprogramms, bei dem die vorderen und hinteren Räder jeweils gleichsinnig schwenken, erlaubt es, den Lenkpol in Verlängerung der Achse eines angehängten Werkzeugs zu positionieren und auf diese Weise zwischen dem Fahrzeug und dem Werkzeug wirkende Querkräfte zu begrenzen.

Des Weiteren wird ein Hundegang-Programm unterstützt, bei dem in Geradeausfahrt alle Räder um denselben vorgegebenen Winkel so eingeschlagen sind, dass die Fahrspuren aller vier Räder gegeneinander versetzt sind. Das Fahren von Kurven im Hundegang-Programm ist möglich, indem ein von dem vorgegebenen Winkel abweichender Winkel an den Vorderrädern eingestellt wird.

Der Fahrer dieses herkömmlichen Fahrzeugs benötigt ein hohes Maß an Umsicht und Konzentration, um jeweils passend zur momentanen Anwendungssituation das richtige Lenkprogramm zu wählen. Ein unzweckmäßig gewähltes Lenkprogramm erschwert das Manövrieren des Fahrzeugs, und in dem Falle, dass ein Werkzeug an das Fahrzeug gekoppelt ist, kann die Wahl des falschen Lenkprogramms sogar zu Schäden an Fahrzeug oder Werkzeug führen.

Aufgabe der Erfindung ist, ein Fahrzeug zu schaffen, das zwar einerseits durch die Möglichkeit, unterschiedliche Lenkprogramme zu verwenden, flexibel und präzise manövrierbar ist, andererseits aber dafür keine erhöhte Aufmerksamkeit des Fahrers erfordert.

Die Aufgabe wird gelöst, indem bei einem landwirtschaftlichen Fahrzeug mit lenkbaren vorderen und hinteren Rädern und einer Lenksteuereinheit zum Steuern eines Lenkpols der Räder anhand einer Fahrtrichtungsinformation, die zwischen verschiedenen, jeweils unterschiedliche Zusammenhänge zwischen Fahrtrichtungsinformation und Lenkpol implementierenden Lenkprogrammen umschaltbar ist, die Lenksteuereinheit das Lenkprogramm ereignisabhängig wechselt.

Die erfindungsgemäß automatisierten Wechsel des Lenkprogramms hängen mit der Bewegung des Fahrzeugs zusammen; d.h. als Ereignis, das einen Wechsel des Lenkprogramms bewirkt, kommt das Erreichen eines Ortes durch das Fahrzeug in Betracht.

Ein solcher Ort ist gemäß der Erfindung eine Grenze einer Feldfläche. Z.B. die Grenze einer Feldfläche die Grenze zu einem Vorgewende oder zu einer anderen Feldfläche mit abweichenden Eigenschaften sein. Einem zweiten Aspekt zufolge kann der Ort auch die Umgebung eines festen oder beweglichen Hindernisses sein, in der, um eine Berührung des Hindernisses zu vermeiden oder, um das Fahrzeug in einem Sollabstand zu dem Hindernis präzise zu führen, ein anderes Lenkprogramm als das außerhalb der Umgebung verwendete geeigneter ist.

Als Mittel zum Erfassen eines einen Lenkprogrammwechsel bewirkenden Ereignisses kommt insbesondere eine Kamera und/oder ein Satellitennavigationsgerät und/oder eine V2V-Funkschnittstelle in Betracht. Eine Kamera ermöglicht insbesondere die Erkennung eines Übergangs zwischen Feldfläche und Vorgewende oder die Abschätzung der Entfernung zu einem Hindernis.

Das Satellitennavigationsgerät kann je nach Umfang der geographischen Daten, auf die es zugreift, die Erfassung diverser Orte wie etwa von Grenzen zwischen Feldfläche und Vorgewende, oder zwischen Feldflächen mit festem und solchen mit weichem Untergrund ermöglichen.

Ein Übergang zwischen festem und weichem Untergrund kann zum Beispiel immer dann angenommen werden, wenn das Fahrzeug eine in den geographischen Daten des Navigationsgerätes verzeichnete befestigte Straße verlässt oder auf diese zurückkehrt; er kann bevorzugterweise auch angenommen werden bei einem Wechsel zwischen trockenen und feuchten Bereichen einer landwirtschaftlichen Fläche, sofern diesbezügliche Angaben in den geographischen Daten enthalten sind.

Als ein bewegliches Hindernis, in dessen Umgebung ein anderes Lenkprogramm verwendet wird als außerhalb, kommt insbesondere ein anderes Fahrzeug in Betracht. Die V2V-Funkschnittstelle erleichtert die Erkennung eines zum erfindungsgemäßen Fahrzeug benachbarten und mit diesem zu koordinierenden Fahrzeugs.

Einer bevorzugten Anwendung zufolge kann die Lenksteuereinheit insbesondere bei einem Übergang von Feldfläche auf Vorgewende, d.h. wenn das Fahrzeug von der Feldfläche aus kommend die Grenze zum Vorgewende erreicht, auf ein Lenkprogramm mit gegensinniger Schwenkung von Vorder- und Hinterrädern umschalten. Dies ermöglicht ein Wenden auf kleinem Raum bei gleichzeitiger Minimierung eines Radierens der Räder, d.h. die Grasnarbe des Vorgewendes wird beim Überfahren nicht beschädigt. Bei der Rückkehr auf die Feldfläche wird zweckmäßigerweise auf das zuvor verwendete Lenkprogramm zurückgeschaltet, bei dem es sich je nach Art des Fahrzeugs und der Untergrundbeschaffenheit der Feldfläche um ein Lenkprogramm mit Frontlenkung, ein Lenkprogramm mit Hecklenkung, ein Lenkprogramm mit gleichsinniger Schwenkung von Vorder- und Hinterrädern oder ein Hundegang-Lenkprogramm, handeln kann.

Bei einem Übergang von festem auf weichen Untergrund kann zweckmäßigerweise zur Bodenschonung die Umschaltung auf ein Hundegang-Lenkprogramm vorgesehen werden.

Einer weiteren bevorzugten Anwendung zufolge kann vorgesehen sein, dass die Lenksteuereinheit bei Annäherung an ein zweites Fahrzeug auf ein Lenkprogramm mit gleichsinniger Schwenkung von Vorder- und Hinterrädern umschaltet. Ein solches Lenkprogramm erleichtert insbesondere eine Annäherung an das zweite Fahrzeug bei paralleler Fahrt. Deshalb kann die Umschaltung auf das Lenkprogramm mit gleichsinniger Schwenkung von Vorder- und Hinterrädern auch auf den Fall beschränkt sein, dass das andere Fahrzeug auf derselben Spur oder einer benachbarten Spur wie das die Lenksteuereinheit aufweisende Fahrzeug in gleicher Richtung wie dieses fährt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein erfindungsgemäßes Fahrzeug in schematischer Draufsicht;
- Fig. 2: das Fahrzeug im Feldeinsatz gemäß einer ersten Ausgestaltung der Erfindung;
- Fig. 3: das Fahrzeug im Feldeinsatz gemäß einer zweiten Ausgestaltung der Erfindung.

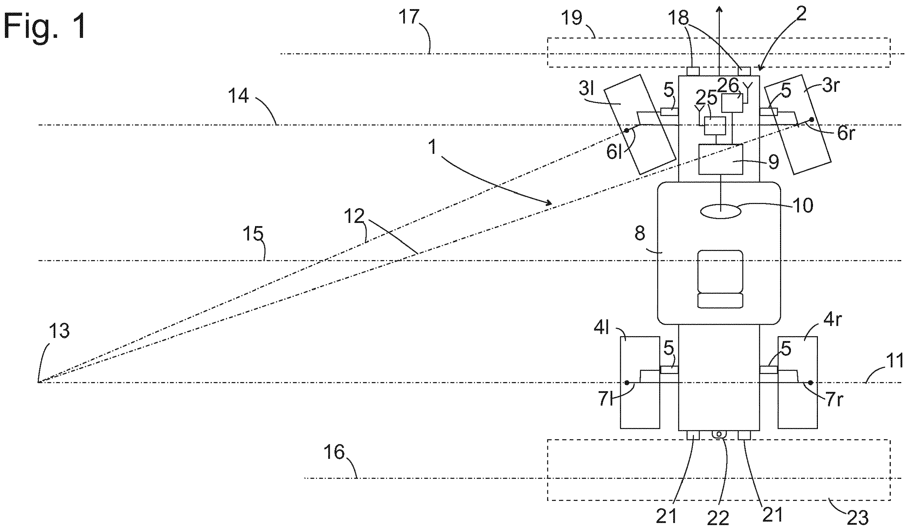

Fig. 1 zeigt ein erfindungsgemäßes Fahrzeug, hier einen Traktor 1, in einer stark schematisierten Draufsicht. Der Traktor 1 hat ein Fahrgestell 2 mit unabhängig voneinander um eine Hochachse schwenkbaren Vorderrädern 31, 3r und Hinterrädern 41, 4r. Vorder- und Hinterräder 31, 3r, 41, 4r haben jeweils unabhängig voneinander, z.B. mittels jeweils eines eigenen Stellzylinders 5, schwenkbare Achsschenkel 61, 6r, 71, 7r. Eine Fahrerkabine ist mit 8 bezeichnet. Eine Lenksteuereinheit 9 bestimmt den Schwenkwinkel der Räder 31, 3r, 41, 4r anhand einer Fahrtrichtungsinformation, die hier von der Stellung eines Lenkrades 10 in der Fahrerkabine 8 abgeleitet ist, die alternativ aber auch von der Stellung eines Steuerknüppels abgeleitet oder von einem Autopiloten, zum Beispiel basierend auf Funknavigations- oder Fernsteuersignalen, bereitgestellt sein könnte.

Die Lenksteuereinheit 9 unterstützt eine Mehrzahl von Lenkprogrammen. Aktuell ist ein Frontlenkprogramm ausgewählt, d.h. die Hinterräder 41, 4r sind ungelenkt und ihre Achsschenkel 71, 7r erstrecken sich entlang einer gleichen hinteren Fahrgestellachse 11, während die Vorderräder 31, 3r entsprechend der Fahrtrichtungsinformation um die Hochachse schwenken und ihre Achsschenkel 61, 6r verlängernde momentane Drehachsen 12 die hintere Fahrgestellachse 11 in einem Lenkpol 13 kreuzen. In Abhängigkeit von der Fahrtrichtungsinformation bzw. der Stärke und Richtung des Lenkradeinschlags bewegt sich der Lenkpol 13 entlang der hinteren Fahrgestellachse 11 rechts oder links vom Fahrgestell 2.

In einem ebenfalls von der Lenksteuereinheit 9 unterstützten Hecklenkprogramm sind die Vorderräder 31, 3r ungelenkt und ihre Achsschenkel 61, 6r erstrecken sich entlang einer gleichen vorderen Fahrgestellachse 14, während die Hinterräder 41, 4r von der Lenksteuereinheit 9 in Abhängigkeit von der Fahrtrichtungsinformation geschwenkt werden. Ein Lenkpol, in dem sich die momentanen Drehachsen der Räder 31, 3r, 41, 4r kreuzen, ist in diesem Programm entlang der vorderen Fahrgestellachse 14 beweglich.

Des Weiteren wird wenigstens ein Lenkprogramm mit gegensinniger Schwenkung von Vorder- und Hinterrädern 3, 4 in Abhängigkeit von der Fahrtrichtungsinformation unterstützt. Wenn die Lenkausschläge von Vorder- und Hinterrädern 3, 4 jeweils entgegengesetzt gleich sind, bewegt sich der Lenkpol entlang einer Geraden 15, die mittig zwischen vorderer Fahrgestellachse 14 und hinterer Fahrgestellachse 11 verläuft.

Des Weiteren werden verschiedene Lenkprogramme unterstützt, bei denen Vorder- und Hinterräder 31, 3r, 41, 4r jeweils gleichsinnig schwenken. Bei einem dieser Programme schwenken alle Räder 31, 3r, 41, 4r um den gleichen Winkel. Ihre momentanen Drehachsen sind somit jederzeit parallel, und ein Lenkpol liegt im Unendlichen. Dieses Lenkprogramm eignet sich insbesondere, um beim Fahren entlang einer vorgegebenen Spur die Position des Fahrzeugs quer zu seiner Spur präzise zu steuern.

Es gibt weitere Lenkprogramme mit gleichsinniger Schwenkung von Vorder- und Hinterrädern 31, 3r, 41, 4r, bei denen die Schwenkwinkel zwischen Vorder- und Hinterrädern unterschiedlich sind. Wenn der Schwenkwinkel der vorderen Räder 31, 3r stärker ist als der der hinteren Räder 41, 4r, dann resultiert ein Lenkpol hinter der hinteren Fahrgestellachse 11; wenn die hinteren Räder 41, 4r stärker schwenken als die vorderen, liegt der Lenkpol vor der vorderen Fahrgestellachse 14. Kurven, entlang derer in diesen beiden Lenkprogrammen der Lenkpol beweglich ist, sind in Fig. 1 durch Geraden 16 bzw. 17 dargestellt. Die Gesamtheit der in einem gegebenen Lenkprogramm realisierbaren Lenkpole muss jedoch nicht notwendigerweise auf einer Geraden liegen; je nachdem, wie die Schwenkwinkel von Vorder- und Hinterrädern in der Lenksteuereinheit 9 für ein gegebenes Lenkprogramm untereinander verknüpft sind, können die Lenkpole auch auf gekrümmten Kurven liegen. Der Abstand der Lenkpole von den Fahrgestellachsen 11 bzw. 14 ist willkürlich wählbar.

Weitere Lenkprogramme ergeben sich durch Kombination der oben beschriebenen Programme mit dem Hundegang. Während normalerweise bei Geradeausfahrt die Achsschenkel der vorderen Räder 31, 3r bzw. der hinteren Räder 41, 4r auf einer gleichen Linie, der vorderen bzw. hinteren Fahrgestellachse 14 bzw. 11, liegen, sind im Hundegang bei Geradeausfahrt alle Räder um einen gleichen Winkel in gleicher Richtung gegen ihre Fahrgestellachse geschwenkt, wobei dieser Hundegang-Winkel so gewählt ist, dass die Fahrspuren aller Räder seitlich gegeneinander versetzt sind. Kurvenfahren im Hundegang ist mit Frontlenkung, Hecklenkung, gleichsinniger oder gegensinniger Schwenkung von Vorder- und Hinterrädern 31, 3r, 41, 4r möglich.

Das Fahrgestell 2 ist an seinem vorderen Ende mit einer Kupplung 18 versehen, an der diverse Typen von Vorsatzwerkzeugen 19, zum Beispiel ein Mähbalken, montierbar sind. In entsprechender Weise sind Kupplungen 21, 22 für ein Werkzeug 23 oder einen Anhänger am Heck des Fahrgestells 2 vorgesehen. Insbesondere Werkzeuge zur Bodenbearbeitung, zum Beispiel eine Egge, werden über die Kupplung 21 am Heck des Traktors 1 montiert. Je nach Art und Anbauposition des Werkzeugs 19 oder 23 am Fahrzeug können unterschiedliche Lenkprogramme für den Feldeinsatz zweckmäßig sein. Für das frontmontierte Werkzeug 19 eignen sich das Hecklenkprogramm oder ein Lenkprogramm mit gleichsinniger Schwenkung der Räder 31, 3r, 41, 4r, bei dem die Lenkpole, wie durch die Gerade 17 dargestellt, vor der vorderen Fahrgestellachse 14 liegen. Indem die Gerade 17 der Lenkpole sich durch das Werkzeug 19 erstreckt oder gar vor diesem liegt, wird erreicht, dass beim Kurvenfahren das Werkzeug 19 nicht zur Innenseite der Kurve hin überschwenkt. So kann verhindert werden, dass, wenn ein Hindernis eng umfahren werden muss, das Werkzeug 19 in Richtung des Hindernisses ausschwenkt und mit diesem kollidiert.

Wenn ein heckmontiertes bodenbearbeitendes Werkzeug wie das Werkzeug 23 bei Kurvenfahrt zur Seite ausschwenkt, treten zwischen Werkzeug 23 und Traktor 1 erhebliche Querkräfte auf, die zu Schäden führen könnten. Derartige Querkräfte werden begrenzt bzw. vermieden durch die Verwendung des Frontlenkprogramms bzw. eines Lenkprogramms, dessen Lenkpole eine hinter der hinteren Fahrgestellachse 11 verlaufende, vorzugsweise sich durch das Werkzeug 23 hindurch erstreckende Kurve, im hier gezeigten Fall die Gerade 16, bilden.

Für die Auswahl eines Lenkprogramms relevante Information empfängt die Lenksteuereinheit 9 von einem Navigationsgerät 25 und/oder einer V2V-Funkschnittstelle 26. Das Navigationsgerät 25 berechnet in an sich bekannter Weise die geographische Position des Traktors 1 anhand von Satelliten-Funksignalen wie etwa GPS-Signalen und ermittelt basierend auf der so berechneten Position Informationen über die Umgebung, in der sich der Traktor 1 momentan befindet, aus einer mitgeführten Datenbank. Diese Datenbank kann insbesondere Angaben zu Lage und Gestalt von zu bearbeitenden landwirtschaftlichen Flächen, zu deren Bodenbeschaffenheit, ihrer Topographie etc. enthalten.

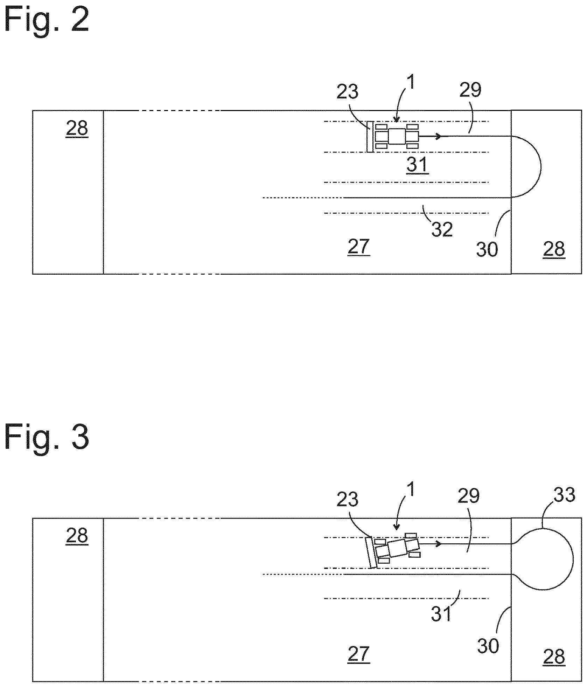

Bezogen auf Fig. 2, die den Traktor 1 im Feldeinsatz in einer schematischen Draufsicht zeigt, liefert das Navigationsgerät 25 der Lenksteuereinheit 9 insbesondere Aufschluss darüber, ob der Traktor 1 sich auf einer zu bearbeitenden Feldfläche 27 oder einem die Feldfläche 27 begrenzenden Vorgewende 28 befindet. Solange sich der Traktor 1 auf der Feldfläche 27 befindet, zum Beispiel auf einer geradlinigen Spur 29, sind allenfalls geringfügige Positionskorrekturen des Traktors 1 quer zur Fahrtrichtung erforderlich, aber keine starken Richtungsänderungen. Es kann daher zum Beispiel das Frontlenkprogramm oder, mit Rücksicht auf das heckmontierte Werkzeug 23, dasjenige Lenkprogramm ausgewählt sein, das die hinter dem Traktor 1 durch das Werkzeug 23 verlaufende Lenkpolgerade 17 realisiert.

Wenn der Traktor 1 an der Grenze 30 zum Vorgewende 28 angekommen ist, liefert das Navigationsgerät 25 eine diesbezügliche Meldung an die Lenksteuereinheit 9. Um auf kleinem Raum wenden zu können, schaltet die Lenksteuereinheit 9 um auf das Lenkprogramm mit gegensinniger Schwenkung von Vorder- und Hinterrädern und steuert gleichzeitig die Anhebung des Werkzeugs 23 in eine Stellung ohne Bodeneingriff. Nach Durchfahren des Vorgewendes 28 signalisiert das Navigationsgerät 25 das erneute Erreichen der Grenze 30, und die Lenksteuereinheit 9 schaltet auf das in der Spur 29 verwendete Lenkprogramm zurück und senkt das Werkzeug 23 wieder ab.

Zwar ermöglicht die gegensinnige Schwenkung von Vorder- und Hinterrädern bereits einen engen Wendekreis, dennoch ist der Radius eines solchen Wendekreises im allgemeinen deutlich größer als die Breite des Werkzeugs 23. Zwischen der Spur 29 und einer im Anschluss an die Wende gefahrenen Spur 32 liegt wenigsten eine Spur 31, die in einem zweiten Durchgang bearbeitet werden muss. Ohne bodenstrapazierendes Rangieren im Vorgewende 28 ist es nicht möglich, auf der Feldfläche 27 unmittelbar zueinander benachbarte Spuren wie etwa die Spuren 29 und 31 nacheinander abzufahren.

In dem Anwendungsbeispiel der Fig. 3 bewegt sich der Traktor 1 im Hundegang, während er sich von der Feldfläche 27 aus auf einer Spur 29 der Grenze 30 nähert. Die Längsrichtung des Fahrgestells 2 ist gegen die Richtung der Spur 29 seitwärts, hier in Fahrtrichtung nach links, abgelenkt. Das Hundegang-Lenkprogramm kann hier auf der gesamten Feldfläche 27 von einem Vorgewende 28 zum anderen durchgehend verwendet werden, denkbar ist aber auch, dass in einem zentralen Bereich der Feldfläche ein Lenkprogramm verwendet wird, bei dem die hinteren Räder 41, 4r in denselben Fahrspuren wie die vorderen 31, 3r laufen, und das Navigationsgerät 25 in einem vorgegebenen Abstand vor Erreichen der Grenze 30 eine Meldung an die Lenksteuereinheit 9 erzeugt, die diese veranlasst, von diesem Lenkprogramm in das Hundegang-Lenkprogramm zu wechseln.

Eine Meldung der Lenksteuereinheit 9, die das Erreichen der Grenze 30 anzeigt, bewirkt zunächst ein Schwenken aller Räder in eine zum Fahrgestell 2 parallele Orientierung. Dadurch fällt die Fahrtrichtung wieder mit der Längsrichtung des Fahrgestells überein, und der Traktor 1 weicht von der Fahrtrichtung der Spur 29 nach links ab. Anschließend wechselt die Lenksteuereinheit 9 in ein Lenkprogramm mit gegensinniger Schwenkung der Räder 31, 3r bzw. 41, 4r, um eine Ω-förmige Kurve 33 auf engem Radius zu durchfahren. Wenn der Traktor vom Vorgewende 28 aus die Grenze 30 wieder erreicht, finden die oben beschriebenen Umschaltungen in umgekehrter Reihenfolge statt, so dass auf der anschließenden Spur 31 wieder im Hundegang gefahren wird. Die Spur 31 ist zur zuvor befahrenen Spur 29 unmittelbar benachbart; es bliebt keine Fläche zwischen den Spuren unbearbeitet, ohne dass im Vorgewende 28 hin- und herrangiert werden muss.

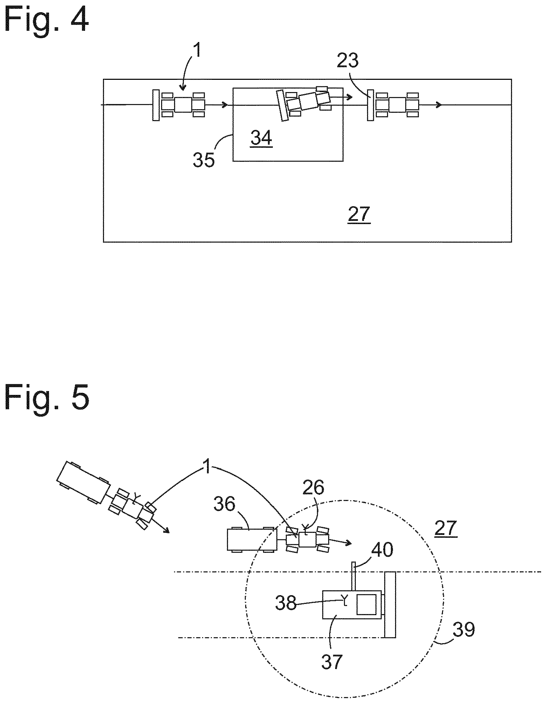

In Fig. 4 bezeichnet das Bezugszeichen 34 einen Feldabschnitt mit vom Rest der Feldfläche 27 abweichenden Eigenschaften, zum Beispiel eine Senke, in der der Boden feuchter und nachgiebiger ist als auf der restlichen Feldfläche 27. Wenn das Navigationsgerät 25 der Lenksteuereinheit 9 das Erreichen einer Grenze 35 dieses Feldabschnitts 34 signalisiert, dann reagiert die Lenksteuereinheit 9 durch kurzzeitiges Fahren einer Kurve, um das Fahrgestell 2 schräg zur bisherigen Fahrtrichtung auszurichten, das Werkzeug 23 dabei aber nicht seitwärts zu versetzen, und wechselt dann in ein Hundegang-programm, um unter Beibehaltung der ursprünglichen Fahrtrichtung, aber mit schräg zur Fahrtrichtung orientiertem Fahrgestell 2 weiterzufahren, so dass die Fahrspuren der Räder 3, 4 gegeneinander versetzt sind und sich so die Belastung des Bodens durch das Gewicht des Traktors 1 im Feldabschnitt 32 auf eine möglichst große Fläche verteilt. Bei Verlassen des Feldabschnitts 34 wir die Änderung wieder rückgängig gemacht.

Umgekehrt ist auch eine Anwendung denkbar, bei der auf einem überwiegenden Teil der Feldfläche der Traktor 1 zur Bodenschonung im Hundegang fährt, dass aber die Feldfläche einen Hangabschnitt aufweist, zu dessen Überwindung wenigstens bei Bergauffahrt ein Wechsel in ein Lenkprogramm notwendig ist, in dem die hinteren Räder 41, 4r in den Fahrspuren der vorderen Räder 31, 3r laufen, so dass sie auf dem von den vorderen Rädern vorverdichteten Untergrund eine höhere Zugkraft entfalten können. Auch dieser Wechsel kann jeweils bei Erreichen einer Grenze, am Fuße des Hangabschnitts, basierend auf einer Meldung des Navigationsgeräts 25 automatisch ausgelöst und am Scheitel des Hangabschnitts zurückgenommen werden.

Fig. 5 zeigt eine andere Anwendungssituation, in welcher der Traktor 1 mit an seine Kupplung 22 angekoppeltem Anhänger 36 auf einer Feldfläche 27 unterwegs ist, um einen gleichzeitig die Fläche 27 aberntenden Mähdrescher 37 zu entladen. Der Mähdrescher 37 verfügt über eine V2V-Funkschnittstelle 38, die mit der Funkschnittstelle 26 des Traktors 1 kompatibel ist. Anhand von vom Navigationsgerät 25 gelieferter Information zur eigenen Position und über die Funkschnittstellen 26, 38 empfangener Positionsinformationen des Mähdreschers 37 ermittelt die Lenksteuereinheit 9, auf welcher Seite der Grenze 40 eines Nahbereichs 39 des Mähdreschers 37 sich der Traktor 1 befindet. Alternativ kann eine solche Entscheidung ohne Rückgriff auf Positionsinformationen anhand der Stärke eines durch die Funkschnittstelle 26 empfangenen Funksignals oder auch anhand von Bildern einer Kamera getroffen werden, die an Bord des Traktors 1 oder des Mähdreschers 37 montiert ist und deren jeweiligen Nahbereich überwacht. Außerhalb des Nahbereichs 39 nutzt die Lenksteuereinheit 9, wie in der Figur angedeutet, das Frontlenkprogramm oder ein Lenkprogramm mit gleichsinniger Schwenkung von Vorder- und Hinterrädern, bei dem der Lenkpol hinter der hinteren Fahrgestellachse 11 des Traktors 1 liegt, so dass im Bedarfsfall enge Kurven gefahren werden können und starke Richtungswechsel möglich sind. Mit Eintritt in den Nahbereich 39 wechselt die Lenksteuereinheit 9 auf ein Lenkprogramm mit gleichen Schwenkwinkeln an allen Rädern 31, 3r, 41, 4r, um eine Annäherung an den Mähdrescher 37 zu ermöglichen und die Neigung des Anhängers 36, bei einem Fahrtrichtungswechsel des Traktors 1 überzuschwingen, zu minimieren. So gelingt es, den Anhänger 36 unter einem Auswurfkrümmer 41 des Mähdreschers 37 so zu positionieren, dass die Ladefläche des Anhängers 36 von übergeladenem Erntegut exakt an einer vorgesehenen Stelle getroffen wird. Wenn nach Ende des Überladevorgangs der Traktor 1 den Nahbereich 39 wieder verlässt, schaltet die Lenksteuereinheit 9 auf das zuvor verwendete Lenkprogramm zurück.

Um die Wahrscheinlichkeit einer gegenseitigen Beeinflussung bei einer zufälligen Annäherung von Traktor 1 und Mähdrescher 37 zu verringern, kann vorgesehen werden, dass ein Umschalten des Lenkprogramms nicht automatisch bei jedem Ein- oder Austritt des Traktors 1 aus dem Nahbereich 39 stattfindet, sondern dass bei einem Eintritt in den Nahbereich 39 auch die Fahrtrichtungen von Traktor 1 und Mähdrescher 37 verglichen werden und eine Umschaltung nur dann vorgenommen wird, wenn diese soweit übereinstimmen, dass eine zum Mähdrescher 37 exakt parallele Fahrtrichtung für den Traktor 1 erreichbar ist, ohne zwischenzeitlich den Nahbereich 39 verlassen zu müssen.

### Bezugszeichen

- 1: Traktor
- 2: Fahrgestell
- 31, 3r: vorderes Rad
- 41, 4r: hinteres Rad
- 5: Stellzylinder
- 61, 6r: Achsschenkel
- 71, 7r: Achsschenkel
- 8: Fahrerkabine
- 9: Lenksteuereinheit
- 10: Lenkrad
- 11: hintere Fahrgestellachse
- 12: momentane Drehachse
- 13: Lenkpol
- 14: Achse
- 15: Lenkpolgerade
- 16: Lenkpolgerade
- 17: Lenkpolgerade
- 18: Kupplung
- 19: Werkzeug
- 21: Kupplung
- 22: Kupplung
- 23: Werkzeug
- 25: Navigationsgerät
- 26: Funkschnittstelle
- 27: Feldfläche
- 28: Vorgewende
- 29: Spur
- 30: Grenze
- 31: Spur
- 32: Spur
- 33: Kurve
- 34: Feldabschnitt
- 36: Anhänger
- 37: Mähdrescher
- 38: Funkschnittstelle
- 39: Nahbereich
- 40: Grenze
- 41: Auswurfkrümmer

## Patentansprüche

1. Landwirtschaftliches Fahrzeug (1), mit lenkbaren vorderen und hinteren Rädern (3, 3r, 4l, 4r) und einer Lenksteuereinheit (9) zum Steuern eines Lenkpols (13) der Räder (3l, 3r, 4l, 4r) anhand einer Fahrtrichtungsinformation, die zwischen verschiedenen, jeweils unterschiedliche Zusammenhänge zwischen Fahrtrichtungsinformation und Lenkpol (13) implementierenden Lenkprogrammen umschaltbar ist, **dadurch gekennzeichnet, dass** die Lenksteuereinheit (9) das Lenkprogramm ereignisabhängig wechselt, und wobei ein Ereignis, das einen Wechsel des Lenkprogramms bewirkt, das Erreichen eines Ortes ist, wobei der Ort eine Grenze (30, 35) einer Feldfläche (27, 34) ist.

2. Fahrzeug nach Anspruch 1,**dadurch gekennzeichnet, dass** die Lenkprogramme wenigstens zwei unter Frontlenkung, Hecklenkung, Allradlenkung mit gleichsinniger Schwenkung von Vorder- und Hinterrädern, insbesondere Hundegang, und Allradlenkung mit gegensinniger Schwenkung von Vorder- und Hinterrädern ausgewählte Programme umfassen.

3. Fahrzeug nach Anspruch 2, **dadurch gekennzeichnet, dass** der Ort die Umgebung (39) eines festen oder beweglichen Hindernisses (37) ist.

4. Fahrzeug nach einem der vorhergehenden Ansprüche, **dadurch gekennzeichnet, dass** es als Mittel zum Erfassen eines Ereignisses eine Kamera und/oder ein Satelliten-Navigationsgerät (25) und/oder eine V2V-Funkschnittstelle (26) umfasst.

5. Fahrzeug nach einem der vorhergehenden Ansprüche, **dadurch gekennzeichnet, dass** die Lenksteuereinheit (9) bei einem Übergang von Feldfläche (27) auf Vorgewende (28) auf Allradlenkung mit gegensinniger Schwenkung von Vorder- und Hinterrädern (3l, 3r, 4l, 4r) umschaltet.

6. Fahrzeug nach einem der vorhergehenden Ansprüche, **dadurch gekennzeichnet, dass** die Lenksteuereinheit (9) bei einem Übergang von festem auf weichen Untergrund (34) auf Hundegang umschaltet.

7. Fahrzeug nach einem der vorhergehenden Ansprüche, **dadurch gekennzeichnet, dass** die Lenksteuereinheit (9) bei Erreichen der Umgebung (39) eines zweiten Fahrzeugs (37) auf Allradlenkung mit gleichsinniger Schwenkung von Vorder- und Hinterrädern (3l, 3r, 4l, 4r) umschaltet.

8. Fahrzeug nach Anspruch 7,**dadurch gekennzeichnet, dass** die Lenksteuereinheit (9) nur dann auf Allradlenkung mit gleichsinniger Schwenkung umschaltet, wenn das andere Fahrzeug (37) auf derselben Spur wie das Fahrzeug (1) oder einer benachbarten Spur in gleicher Richtung fährt.

## Claims

1. Agricultural vehicle (1), with steerable front and rear wheels (3, 3r, 4l, 4r) and a steering control unit (9) for controlling a steering pole (13) of the wheels (3l, 3r, 4l, 4r) on the basis of direction-of-travel information, which can be switched between various steering programs implementing in each case different interrelationships between direction-of-travel information and steering pole (13), **characterized in that** the steering control unit (9) changes the steering program in an event-dependent manner, and wherein an event which brings about a change in the steering program is reaching a location, wherein the location is a boundary (30, 35) of a field section (27, 34).

2. Vehicle according to claim 1, **characterized in that** the steering programs comprise at least two programs selected from front steering, rear steering, all-wheel steering in which the front and rear wheels pivot in the same direction, in particular crab steering, and all-wheel steering in which the front and rear wheels pivot in opposite directions.

3. Vehicle according to claim 2, **characterized in that** the location is the surroundings (39) of a fixed or moving obstacle (37).

4. Vehicle according to one of the preceding claims, **characterized in that** it comprises, as means for detecting an event, a camera and/or a satellite navigation device (25) and/or a V2V wireless interface (26).

5. Vehicle according to one of the preceding claims, **characterized in that**, in the case of a transition from field section (27) to headland (28), the steering control unit (9) switches to all-wheel steering in which the front and rear wheels (3l, 3r, 4l, 4r) pivot in opposite directions.

6. Vehicle according to one of the preceding claims, **characterized in that**, in the case of a transition from solid to soft ground (34), the steering control unit (9) switches to crab steering.

7. Vehicle according to one of the preceding claims, **characterized in that**, on reaching the surroundings (39) of a second vehicle (37), the steering control unit (9) switches to all-wheel steering in which the front and rear wheels (3l, 3r, 4l, 4r) pivot in the same direction.

8. Vehicle according to claim 7, **characterized in that** the steering control unit (9) only switches to all-wheel steering with pivoting in the same direction when the other vehicle (37) is travelling in the same direction on the same track as the vehicle (1) or an adjacent track.

## Revendications

1. Véhicule agricole (1) comprenant des roues avant et arrière directrices (3, 3r, 41, 4r) et une unité de commande directionnelle (9) pour commander un pôle directionnel (13) des roues (31, 3r, 41, 4r) sur la base d'une information de sens de la marche, laquelle unité de commande directionnelle étant commutable entre divers programmes directionnels implémentant des rapports à chaque fois différents entre information de sens de la marche et pôle directionnel (13), **caractérisé en ce que** l'unité de commande directionnelle (9) change de programme directionnel en fonction des événements, et un événement qui provoque un changement de programme directionnel étant l'atteinte d'un site, le site étant une limite (30, 35) d'une surface de champ (27, 34).

2. Véhicule selon la revendication 1, **caractérisé en ce que** les programmes directionnels comprennent au moins deux programmes sélectionnés parmi direction avant, direction arrière, direction à quatre roues avec braquage de même sens des roues avant et arrière, en particulier marche en crabe, et direction à quatre roues avec braquage de sens contraire des roues avant et arrière.

3. Véhicule selon la revendication 2, **caractérisé en ce que** le site est le voisinage (39) d'un obstacle fixe ou mobile (37).

4. Véhicule selon une des revendications précédentes, **caractérisé en ce qu'**il comprend, comme moyen pour détecter un événement, une caméra et/ou un appareil de navigation satellitaire (25) et/ou une interface radio V2V (26) .

5. Véhicule selon une des revendications précédentes, **caractérisé en ce que**, lors d'un passage de la surface de champ (27) à une tournière (28), l'unité de commande directionnelle (9) se commute en direction à quatre roues avec braquage de sens contraire des roues avant et arrière (31, 3r, 41, 4r).

6. Véhicule selon une des revendications précédentes, **caractérisé en ce que**, lors d'un passage d'un sol ferme à un sol meuble (34), l'unité de commande directionnelle (9) se commute en marche en crabe.

7. Véhicule selon une des revendications précédentes, **caractérisé en ce que**, à l'atteinte du voisinage (39) d'un second véhicule (37), l'unité de commande directionnelle (9) se commute en direction à quatre roues avec braquage de même sens des roues avant et arrière (31, 3r, 41, 4r).

8. Véhicule selon la revendication 7, **caractérisé en ce que** l'unité de commande directionnelle (9) ne se commute en direction à quatre roues avec braquage de même sens que lorsque l'autre véhicule (37) roule dans la même direction sur la même voie que le véhicule (1) ou sur une voie voisine.
